Europäisches Patentamt

European Patent Office

Office européen des brevets

(19)

(11) Veröffentlichungsnummer: **0 021 186**
**B1**

(12) **EUROPÄISCHE PATENTSCHRIFT**

(45) Veröffentlichungstag der Patentschrift: 01.06.83

(51) Int. Cl.³: **C 09 J 3/14, C 08 J 5/12**

(21) Anmeldenummer: **80103153.5**

(22) Anmeldetag: **06.06.80**

(54) Bindemittel auf Basis wässriger Dispersionen zum Aufvulkanisieren von Kautschuk.

(30) Priorität: **11.06.79 DE 2923651**

(43) Veröffentlichungstag der Anmeldung:
**07.01.81 Patentblatt 81/1**

(45) Bekanntmachung des Hinweises auf die Patenterteilung:
**01.06.83 Patentblatt 83/22**

(84) Benannte Vertragsstaaten:
**AT BE CH FR IT LI NL SE**

(56) Entgegenhaltungen:
**FR - A - 2 002 952**
**FR - A - 2 130 108**
**FR - A - 2 187 533**
**FR - A - 2 372 857**
**US - A - 3 879 337**
**US - A - 3 925 590**
**US - A - 3 936 576**
**US - A - 3 939 294**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien**
**Postfach 1100 Henkelstrasse 67**
**D-4000 Düsseldorf 1 (DE)**

(72) Erfinder: **Kohlstadt, Hans-Peter**
**Gemarkenstrasse 124**
**D-4300 Essen (DE)**
Erfinder: **Özelli, Riza Nur, Dr.**
**Stephanusstrasse 37**
**D-4040 Neuss (DE)**
Erfinder: **Gierenz, Gerhard, Dr.**
**Dieselstrasse 80**
**D-5650 Solingen-Wald (DE)**

Courier Press, Leamington Spa, England.

# 0 021 186

## Bindemittel auf Basis wäßriger Dispersionen zum Aufvulkanisieren von Kautschuk

Gegenstand der vorliegenden Erfindung sind Bindemittel zum Aufvulkanisieren von Kautschuk auf Basis von haftvermittelnden, wäßrigen Dispersionen, um natürlichen und/oder synthetischen Kautschuk mit stabilen Substraten zu verbinden.

Bindemittel zum Verbinden von Kautschuk durch Aufvulkanisieren auf Substrate, die unter Vulkanisationsbedingungen stabil sind, wie Metalle oder auch Kunststoffe oder Elastomeren, sind seit langem bekannt. Die für die universelle Verbindung von elastomeren Materialien mit metallischen Substraten bei erhöhten Temperaturen geeigneten Bindemittel enthalten üblicherweise polymere Filmbildner, Haftvermittler, Füll- und Zusatzstoffe sowie organische Lösungsmittel. Hierbei sind Produkte, die halogenierte oder chlorsulfonierte Kautschuke als Filmbildner, polyfunktionelle Isocyanate und/oder organofunktionelle Silane sowie aromatische Poly-nitroso-Verbindungen als Haftvermittler, Ruß, Kieselsäure, basisches Bleiphosphit und/oder Zinkoxid als Füll- und Zusatzstoffe, sowie aromatische und/oder halogenierte Kohlenwasserstoffe als Lösungsmittel enthalten, eine bevorzugte Gruppe.

Bekannt sind ferner Bindemittel, die als Hauptkomponenten wäßrige Dispersionen oder Lösungen spezieller, carboxylgruppenhaltiger Kautschuke zusammen mit üblichen Lösungsmitteln enthalten sowie die Kombination wäßriger Polymerdispersionen mit Resorcin-Harzen. Schließlich sind Zusammensetzungen aus organischen oligomeren oder polymeren Filmbildnern, aromatischen Poly-nitroso-Verbindungen und organofunktionellen Phosphonsäuren oder Phosphorsäurepartialesteren für diesen Verwendungszweck bekannt.

Während die herkömmlichen Bindemittel die mit der Verwendung organischer Lösungsmittel verbundenen Nachteile in bezug auf Toxizität, Brennbarkeit, Wirtschaftlichkeit etc. aufweisen, zeigen die bisher bekannten Bindemittel auf der Basis wäßriger Dispersionen oder Lösungen diese Nachteile zwar nicht, jedoch steht einer weiteren Verbreitung dieser Systeme ihre geringe Universalität in bezug auf die zu verbindenden elastomeren Substrate entgegen.

Aufgabe der vorliegenden Erfindung war es daher, universell verwendbare, lagerbeständige Einkomponenten-Bindemittel zum Verbinden einer Vielzahl von Kautschuksorten bei erhöhten Temperaturen mit den verschiedensten Substraten zu finden, die keine flüchtigen organischen Lösungsmittel oder andere die Umwelt belastenden Substanzen enthalten und trotzdem feste und widerstandsfähige Bindungen liefern.

Diese Aufgabe wird gelöst durch ein Bindemittel in Form einer wäßrigen Dispersion, die enthält auf

a) 1000 Gewichtsteile Polyvinylidenchlorid beziehungsweise Vinylidenchlorid/Acrylestercopolymerisat und/oder Butadien/Acrylnitrilcopolymerisat,
b) 100 bis 500 Gewichtsteile mehrfunktionelle aromatische Nitrosoverbindungen,
c) 50 bis 300 Gewichtsteile verkappte mehrfunktionelle Isocyanate,
d) 20 bis 100 Gewichtsteile Polyvinylpyrrolidon beziehungsweise wasserlösliche Mischpolymerisate des Vinylpyrrolidons,
e) 5 bis 500 Gewichtsteile weitere Hilfsstoffe, wie Pigmente, Ruß, Entschäumer und/oder Emulgatoren und dergleichen.

Bei den Copolymerisaten auf Basis von Vinylidenchlorid beziehungsweise Butadien/Acrylnitril handelt es sich um handelsübliche Produkte, die bereits als wäßrige Dispersionen angeboten werden. Bei Vinylidenchlorid kommt als Comonomeres für die Polymerisation an erster Stelle Acrylsäuremethylester in Betracht. Butadien und Acrylnitril können in verschiedensten Verhältnissen von etwa 5 bis 45% Acrylnitril mischpolymerisiert werden. Ferner sind für beide Typen von Polymerisaten neben Acrylnitril geeignete Comonomere Vinylchlorid, Vinylacetat, Styrol und freie Acrylsäure beziehungsweise Methacrylsäure. Durch die Wahl der Comonomeren und die Menge ihres Einsatzes können die Eigenschaften der Polymeren in gewünschter Weise variiert werden. Bei den für den erfindungsgemäßen Zweck einsetzbaren dispergierten Polymerisaten handelt es sich um filmbildende Thermoplaste, die für die Beschichtung von Geweben, Papier, Folien oder als Bindemittel für verschiedenartige Fasern oder Rohstoffe für Klebstoffe geeignet sind.

Die zur Herstellung der erfindungsgemäßen Bindemittel geeigneten Nitrosoverbindungen können von den verschiedensten aromatischen Kohlenwasserstoffen abgeleitet werden. Insbesondere kommen solche aromatischen Poly-C-nitroso-Verbindungen mit 1 bis 3 aromatischen Kernen einschließlich annellierten infrage, welche 2 bis 6 Nitroso-Gruppen aufweisen, die direkt an nicht benachbarte Kernkohlenstoffatome gebunden sind. Die bevorzugten Poly-C-nitroso-Verbindungen sind Dinitrosobenzole und Dinitrosonaphthaline, zum Beispiel meta- oder para-Dinitrosobenzol und meta- oder para-Dinitrosonaphthaline. Die Ringwasserstoffatome des aromatischen Kerns können durch Alkyl-, Alkoxy-, Cycloalkyl-, Aryl-, Aralkyl-, Alkaryl-, Arylamin-, Aryl- nitroso-, Amino-, Halogenreste und dergleichen Reste substituiert sein. Die Anwesenheit solcher Substituenten im aromatischen Kern beziehungsweise Ring hat nur einen geringen Einfluß auf dei Aktivität der Poly-C-nitroso-Verbindungen. Als für den erfindungsgemäßen Zweck weiterhin geeignet seien beispielsweise erwähnt: 2,5-Dinitroso-p-cymen,

2

2-Methyl-1,4-dinitrosobenzol, 2-Methyl-5-chlor-1,4-dinitrosobenzol, 2-Fluor-1,4-dinitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol. Selbstverständlich können auch die Bildungskomponenten für die Nitrosoverbindungen, nämlich Oxime mit Oxidationsmitteln, eingesetzt werden.

Die erfindungsgemäß als dritte wesentliche Komponente einzusetzenden verkappten mehrfunktionellen Isocyanate leiten sich von den technologisch vielseitig einsetzbaren handelsüblichen Isocyanaten ab. Die sogenannten Isocyanatabspalter können sich beispielsweise ableiten von Toluylendiisocyanat, Naphthalindiisocyanat, Isophorondiisocyanat, Diphenylmethandiisocyanat, dimerisiertem Toluylendiisocyanat, Hexamethylendiisocyanat und anderen mehr, wie mehrfunktionellen Isocyanaten, wie Triphenylmethantriisocyanat oder dem Additionsprodukt von 3 Mol Toluylendiisocyanat, auch 1 Mol Trimethylolpropan. Als Mittel zum Verkappen der Isocyanatgruppen eignen sich beispielsweise Phenole, Alkohole, wie tert. Amylalkohol oder tert. Butanol, Acetessigester, Malonester, Acetylaceton, Butanonoxim, Phthalimid, Imidazol oder Natriumhydrogen.

Die Herstellung der Isocyanatabspalter erfolgt entweder bei Raumtemperatur oder vorzugsweise bei Temperaturen um 100°C. Bei der Addition von Verbindungen mit reaktionsfähigen Methylengruppen, wie Malonester und Acetessigester, benötigt man katalytische Mengen von Natrium oder Natriumalkoholat. Die Additionen können in An- oder Abwesenheit von inerten Lösungsmitteln durchgeführt werden.

Das Polyvinylpyrrolidon kann entweder selbst als übliches technisches Produkt mit einem K-Wert von etwa 30 bis 90 eingesetzt werden oder wasserlösliche Mischpolymerisate, beispielsweise Vinylacetat, enthalten. Auch sind solche Copolymerisate des Vinylpyrrolidons geeignet, die als Comonomere andere Vinylester, (Meth)acrylester oder (Methy)acrylamid sowie Vinylchlorid enthalten. Voraussetzung für den Einsatz in den erfindungsgemäßen Kombinationen ist aber eine gute Wasserlöslichkeit. Besonders die Polymerisate mit höherem K-Wert wirken auch stabilisierend auf die Dispersionen ein.

Selbstverständlich sollten die Gemische der erwähnten Verbindungen auch an sich bekannte Hilfsstoffe enthalten. Neben haftungsverbessernden Harzen oder Harzvorstufen aus Phenol-, Alkylphenol-, Resorcinharz, Resol, Novolak sind Kondensationsprodukte aus Epichlorhydrin und mehrwertigen Phenolen, wie Diphenylolpropan, Styrol-Maleinsäureanhydrid-Copolymer und dergleichen mehr in Betracht zu ziehen. Schließlich können die erfindungsgemäßen Dispersionen noch übliche haftverbessernde Füllstoffe enthalten. Es kommen hier infrage, Ruß, Kieselsäure, Zinkoxid, basisches Bleiphosphit und dergleichen mehr. Auch können gewünschtenfalls Pigmente eingearbeitet werden.

Als Dispergierhilfsmittel eignen sich in erster Linie oberflächenaktive Substanzen, insbesondere nichtionogene oberflächenaktive Substanzen. Geeignet sind beispielsweise die Ethylenoxidaddukte an Alkylphenole, wie Nonylphenol oder Fettalkohol oder Fettalkoholpartialester mit Phosphorsäure. Als Stabilisatoren für die Dispersion können weiterhin wasserlösliche Kolloide, wie Methylcellulose, Methylhydroxypropylcellulose, Hydroxyethylcellulose, Polyvinylalkohol mitverwendet werden.

Es wurde gefunden, daß die erfindungsgemäßen Bindemittel zum Verbinden einer Vielzahl von vulkanisierbaren, elastomeren Materialien mit sich selbst oder mit anderen Substraten geeignet sind. Erwähnt seien hier Mischungen auf Basis von Naturkautschuk, Polychloroprenkautschuk, Styrol-Butadienkautschuk, Nitrilkautschuk, Kautschuk aus Ethylen/Propylencopolymeren (EPM), Butylkautschuk, Polyurethankautschuk. Als Substrate kommen infrage insbesondere Metalle wie Eisen, rostfreier Stahl, Blei, Aluminium, Kupfer, Messing, Bronze, Monel-Metalle, Nickel, Zink und dergleichen einschließlich behandelte Metalle, wie phosphatierter Stahl, galvanisierter Stahl und schließlich Glas und Keramikmaterialien.

Die Bindemittel werden auf die Substratoberflächen in konventioneller Weise, wie durch Eintauchen, Aufsprühen, Aufbürsten und dergleichen aufgetragen. Unter Umständen kann es zweckmäßig sein, eine Vorbehandlung mit einem haftverbessernden Mittel (Primer) aus chloriertem Kautschuk, Phenolharz oder dergleichen durchzuführen. Die Substratoberflächen werden nach dem Beschichten trocknen gelassen, bevor sie zusammengebracht werden. Nachdem die Oberflächen zusammengefügt worden sind, werden die Verbundstrukturen in konventioneller Weise erhitzt, um die Vulkanisation herbeizuführen.

Die erfindungsgemäßen Bindemittel sollen einen solchen Feststoffgehalt haben, daß sie noch gut streich- beziehungsweise spritzfähig sind. Der Feststoffgehalt liegt zwischen etwa 20 und 50 Gewichtsprozent. Organische Lösungsmittel können in untergeordneter Menge mitverwendet werden, doch soll ihr Anteil 5 Gewichtsprozent der flüssigen Phase nicht übersteigen.

Beispiele

In den folgenden Beispielen wurden die nachstehend mit A, B, C, D, E und F bezeichneten Kautschukmischungen auf Substrate aufvulkanisiert. Nachstehend werden die Zusammensetzung der Mischung sowie die Vulkanisationsbedinungen angegeben.

3

## Mischung A (NR)

| | Gewichsteile |
|---|---|
| Naturkautschuk | 100 |
| Zinkoxid | 10 |
| Stearinsäure | 2 |
| Phenyl-$\beta$-naphthylamin | 1 |
| Fichtenteer | 2 |
| Ruß-CK3 | 25 |
| Zn-dimethyldithiocarbamat | 0,33 |
| Dibenzothiazyldisulfid | 0,58 |
| Schwefel | 2,75 |

Vulkanisationsbedingungen: 10 Minuten bei 153°C.

## Mischung B (SBR)

| | Gewichtsteile |
|---|---|
| Styrolbutadienkautschuk | 100 |
| Zinkoxid | 5 |
| Stearinsäure | 1 |
| FEF-Ruß (Corax 3) | 50 |
| gesättigte polymere Erdölkohlen-<br>    wasserstoffe (flüssig) | 8 |
| N-Cyclohexyl-2-benzthiophthalimid | 0,2 |
| Benzthiazyl-2-cyclohexylsulfenamid | 0,95 |
| Schwefel | 1,6 |

Vulkanisationsbedingungen: 30 Minuten bei 153°C.

## Mischung C (CR)

| | Gewichtsteile |
|---|---|
| Polychloroprenkautschuk | 100 |
| Magnesiumoxid | 4 |
| Phenyl-$\beta$-naphthylamin | 2 |
| MT-Ruß (Sterling) | 80 |
| Kohlenwasserstoffe KP 300°C | 1 |
| naphthenisches Öl | 5 |
| Tetramethylthiurammonosulfid | 0,5 |
| Di-o-tolylguanidin | 0,5 |
| Ethylenthioharnstoff | 0,5 |
| Schwefel | 1 |

Vulkanisationsbedingungen: 30 Minuten bei 153°C.

## Mischung D (NBR)

| | Gewichtsteile |
|---|---|
| Nitrilkautschuk (42% Acrylnitril) | 100 |
| Stearinsäure | 1 |
| Zinkoxid | 5 |
| Dibutylphthalat | 10 |
| SRF-Ruß | 65 |
| Terpenharz | 10 |
| Tetramethylthiuramdisulfid | 0,31 |
| Schwefel | 1 |

Vulkanisationsbedingungen: 25 Minuten bei 153°C.

# 0 021 186

Mischung E (IIR)

| | Gewichtsteile |
|---|---|
| Butylkautschuk | 100 |
| Stearinsäure | 1 |
| Zinkoxid | 5 |
| HAF-Ruß | 50 |
| Dibenzothiazyldisulfid | 1 |
| Tellur-diethyldithiocarbamat | 1,5 |
| Schwefel | 1 |

Vulkanisationsbedingungen: 30 Minuten bei 153°C.

Es wurden durch Dispergieren in Wasser Bindemittel aus den nachstehend aufgeführten Substanzen hergestellt.

1) Copolymerisat aus Polyvinylidenchlorid und Acrylsäuremethylester in Form einer handelsüblichen circa 55%-igen Dispersion (PVDC/AM).
2) Copolymerisat aus Butadien und Acrylnitril (30%) in Form eines handelsüblichen Latex mit circa 55 bis 58% Feststoff (Nitril-K).
3) p-Dinitrosobenzol (DNB),
4) Phenolharz (Resoltyp, wasserunlöslich) (Resol),
5) Phenol-Formaldehyd-Kondensat (wasserlöslich) (Ph-F-K).
6) Verkapptes Isocyanat (Umsetzungsprodukt des Adduktes aus 1 Mol Trimethylolpropan mit 3 Mol Toluylendiisocyanat mit Butadienoxim) (Isocyanat).
7) Polyvinylpyrrolidon (K-Wert 70) im Form der 30%-igen wäßrigen Lösung (PVP).
8) Additionsprodukt von 20 Mol Ethylenoxid an 1 Mol Nonylphenol (Emulgator).
9) Zinkoxid,
10) SRF-Ruß
11) Behensäureester des Stearylalkohols (Entschäumer),
12) Wasser

In der nachfolgenden Tabelle 1 ist in Abhängigkeit der einzelnen Substanzen 1 bis 12 die Zusammensetzung der Bindemittel I bis X aufgeführt.

Tabelle 1

| Substanz | Bindemittel | | | | | | | | | |
|---|---|---|---|---|---|---|---|---|---|---|
| | I | II | III | IV | V | VI | VII | VIII | IX | X |
| 1) PVDC/AM | 843 | — | 843 | — | 843 | — | 843 | 843 | — | — |
| 2) Nitril-K | — | 843 | — | 843 | — | 843 | — | — | 843 | 843 |
| 3) DND | 253 | 253 | 253 | 253 | 253 | 253 | 253 | 253 | 253 | 253 |
| 4) Resol | 42 | 42 | — | — | — | — | 42 | — | 42 | — |
| 5) Ph-F-K | — | — | 42 | 42 | — | — | — | 42 | — | 42 |
| 6) Isocyanat | — | — | — | — | 168 | 168 | 168 | 168 | 168 | 168 |
| 7) PVP | 28 | 28 | 28 | 28 | 28 | 28 | 28 | 28 | 28 | 28 |
| 8) Emulgator | 12 | 12 | 12 | 12 | 12 | 12 | 12 | 12 | 12 | 12 |
| 9) ZnO | 8 | 8 | 8 | 8 | 8 | 8 | 8 | 8 | 8 | 8 |
| 10) Ruß | 97 | 97 | 97 | 97 | 97 | 97 | 97 | 97 | 97 | 97 |
| 11) Entsch. | 8 | 8 | 8 | 8 | 8 | 8 | 8 | 8 | 8 | 8 |
| 12) Wasser | 1709 | 1709 | 1709 | 1709 | 1583 | 1583 | 1541 | 1541 | 1541 | 1541 |

Blechproben aus kaltgewalztem Stahl wurden mit 1,1,1-Trichlorethan-Dampf entfettet, mit Hartgußkies gestrahlt und wiederum mit Trichlorethan-Dampf behandelt. Anschließend wurden die Bleche in eine 20%-ige Lösung getaucht, die gleiche Teile Novolak und chlorierten Naturkautschuk (65% Cl) enthielt.

Nach dem Trocknen wurden die Bleche mit den Bindemitteln durch Tauchen beschichtet. Die Bleche wurden gemäß ASTM-D 429, Methode B, im Rahmen einer Vulkanisation in der Presse unter einem Druck von 60 daN/cm² an die Kautschukmischungen A, B, C, D und E gebunden. Es wurde eine solche Menge an Kautschuk verwendet, daß die Auflage circa 5 mm betrug. Nach der Lagerung der Prüfkörper während 24 Stunden bei Raumtemperatur wurde der Gummibelag im Winkel von 45° abgeschält. Bestimmt wurde die Schälfestigkeit und das Reißbild entsprechend der Norm. Außerdem wurde die Schälfestigkeit in 95°C heißem Wasser bestimmt (KWT).

5

Die Ergebnisse sind in der nachstehenden Tabelle 2 zusammengefaßt. In Abhängigkeit vom Bindemittel 1 bis 10 sind für die einzelnen Kautschuksorten die Schälwerte beziehungsweise Reißbilder wiedergegeben. Die Zahl vor R bedeutet in % ausgedrückt die innerhalb der Kautschukschicht liegende Reißfläche. In den Fällen, wo 100 nicht erreicht wird, liegt die Reißfläche entweder innerhalb des Bindemittels beziehungsweise ist das Metall freigelegt.

Tabelle 2 (1. Teil)

| Bindemittel | NR | | | SBR | | | CR | | |
|---|---|---|---|---|---|---|---|---|---|
| | daN/ 2.5 cm | Reißb. | KWT Reißb. | daN/ 2.5 cm | Reißb. | KWT Reißb. | daN/ 2.5 cm | Reißb. | KWT Reißb. |
| 1 | 36 | 80 R | 50 R | 70 | 100 R | 70 R | 46 | 100 R | 100 R |
| 2 | 24 | 60 R | 50 R | 61 | 100 R | 50 R | 30 | 70 R | 20 R |
| 3 | 38 | 100 R | 40 R | 74 | 100 R | 100 R | 48 | 100 R | 100 R |
| 4 | 30 | 100 R | 100 R | 72 | 100 R | 100 R | 46 | 100 R | 80 R |
| 5 | 36 | 100 R | 100 R | 72 | 100 R | 100 R | 49 | 100 R | 100 R |
| 6 | 38 | 100 R | 100 R | 76 | 100 R | 100 R | 47 | 100 R | 100 R |
| 7 | 36 | 100 R | 100 R | 72 | 100 R | 100 R | 53 | 100 R | 100 R |
| 8 | 38 | 100 R | 100 R | 76 | 100 R | 100 R | 52 | 100 R | 100 R |
| 9 | 42 | 100 R | 100 R | 78 | 100 R | 100 R | 52 | 100 R | 100 R |
| 10 | 44 | 100 R | 100 R | 74 | 100 R | 100 R | 51 | 100 R | 100 R |

Tabelle 2 (2. Teil)

| Bindemittel | NBR | | | IIR | | |
|---|---|---|---|---|---|---|
| | daN/2.5 cm | Reißb. | KWT Reißb. | daN/2.5 cm | Reißb. | KWT Reißb. |
| 1 | 25 | OR | OR | 48 | 100 R | 100 R |
| 2 | 18 | OR | OR | 41 | 100 R | 100 R |
| 3 | 36 | 70 R | 50 R | 40 | 100 R | 100 R |
| 4 | 35 | 60 R | 40 R | 41 | 100 R | 100 R |
| 5 | 28 | 80 R | 20 R | 40 | 100 R | 100 R |
| 6 | 33 | 60 R | 70 R | 42 | 90 R | 70 R |
| 7 | 40 | 90 R | 50 R | 44 | 100 R | 100 R |
| 8 | 48 | 100 R | 100 R | 42 | 100 R | 100 R |
| 9 | 50 | 100 R | 100 R | 40 | 100 R | 100 R |
| 10 | 49 | 100 R | 100 R | 41 | 100 R | 100 R |

**Patentanspruch**

Bindemittel zum Aufvulkanisieren von Kautschuk auf Metalle oder andere unter Vulkanisationsbedingungen stabile starre Substrate auf Basis von wäßrigen Dispersionen beziehungsweise Systemen von Polymeren, Polykondensaten, mehrfunktionellen Nitrosoverbindungen und weiteren üblichen Hilfsstoffen, gekennzeichnet durch eine Kombination von

a) 1000 Gewichtsteilen Polyvinylidenchlorid beziehungsweise Vinylidenchlorid/Acrylestercopolymerisat und/oder Butadien/Acrylnitrilcopolymerisaten,
b) 100 bis 500 Gewichtsteilen mehrfunktionellen aromatischen Nitrosoverbindungen,
c) 50 bis 300 Gewichtsteilen verkappten mehrfunktionellen Isocyanaten,
d) 20 bis 100 Gewichtsteilen Polyvinylpyrrolidon beziehungsweise wasserlöslichen Mischpolymerisaten des Vinylpyrrolidons,
e) 5 bis 500 Gewichtsteilen weiteren Hilfsstoffen, wie Pigmente, Ruß, Entschäumer und/oder Emulgatoren.

**Revendication**

Agent liant pour la vulcanisation du caout-chouc sur des métaux ou d'autres substrats rigides stables dans des conditions de vulcanisation, cet agent liant étant à base de dispersions aqueuses ou

**0 021 186**

de systèmes de polymères, de polycondensats, de nitroso-composés polyfonctionnels et d'autres substances auxiliaires habituelles, caractérisé en ce qu'il contient, en combinaison:

a) 1.000 parties en poids de chlorure de polyvinylidène ou d'un copolymère de chlorure de vinylidène/ester acrylique et/ou d'un copolymère de butadiène/acrylonitrile,

b) 100 à 500 parties en poids de nitrosocomposés aromatiques polyfonctionnels,

c) 50 à 300 parties en poids d'isocyanates polyfonctionnels masqués,

d) 20 à 100 parties en poids de polyvinylpyrrolidone ou de copolymères hydrosolubles de la vinyl-pyrrolidone,

e) 5 à 500 parties en poids d'autres substances auxiliaires telles que des pigments, du noir de fumée, des agents antimousses et/ou des émulsionnants.

**Claim**

A binder for vulcanising rubber onto metals or other rigid substrates which are stable under vulcanisation conditions, said binder being based on aqueous dispersions or systems of polymers, polycondensates, polyfunctional nitroso compounds and other standard auxiliaries, characterised by a combination of

a) 1000 parts by weight of polyvinylidene chloride or vinylidene chloride/acrylic ester copolymer and/or butadiene/acrylonitrile copolymers,

b) from 100 to 500 parts by weight of polyfunctional aromatic nitroso compounds,

c) from 50 to 300 parts by weight of masked polyfunctional isocyanates,

d) from 20 to 100 parts by weight of polyvinyl pyrrolidone or water-soluble copolymers of vinyl pyrrolidone,

e) from 5 to 500 parts by weight of other auxiliaries, such as pigments, carbon black, defoaming agents and/or emulsifiers.

7